# EUROPÄISCHE PATENTANMELDUNG

(11) **EP 1 569 223 A1**
(43) Veröffentlichungstag der Anmeldung: **31.08.2005**
(21) Anmeldenummer: 04004154.3
(22) Anmeldetag: 24.02.2004
(51) Int. Cl.: G11B 20/00, G10L 19/00, G06T 1/00, H04N 1/32, H04N 7/26

(54) **Sicheres und effizientes Erzeugen digitaler Wasserzeichen**

(71) Anmelder: Fraunhofer-Gesellschaft zur Förderung der angewandten Forschung e.V., 80686 München (DE)
(72) Erfinder: Steinebach, Martin, 63796 Kahl (DE); Chen, Fan, 68167 Mannheim (DE); Zmudzinski, Sascha, 60318 Frankfurt (DE)
(74) Vertreter: Hilleringmann, Jochen

(57) **Zusammenfassung**

Bei der Erzeugung eines Datensatzes wird wie folgt verfahren:
- Unterteilen der Mediendaten in einzelne zeitlich aufeinander folgende Blöcke,
- Erzeugen eines ersten digitalen Wasserzeichens in den Mediendaten, wobei jeder Block einen digitalen Wasserzeichenkode aufweist,
- Erzeugen eines zweiten digitalen Wasserzeichens in den Mediendaten, wobei jeder Block einen digitalen Wasserzeichenkode aufweist, der zum digitalen Wasserzeichenkode des gleichen Blocks der mit dem ersten Wasserzeichen versehenen Mediendaten invers ist,
- Erzeugen von ersten und zweiten Differenzdatensätzen zwischen den Mediendaten und den mit den ersten und den zweiten digitalen Wasserzeichen versehenen Mediendaten und
- Zusammenstellen der ersten und der zweiten Differenzdatensätze zu einem Gesamtdatensatz zur Erzeugung eines Wasserzeichens in den Mediendaten, indem von den Mediendaten blockweise entweder der zugehörige Block des ersten oder des zweiten Differenzdatensatzes subtrahiert wird.

## Beschreibung

### Technisches Anwendungsgebiet

Die Erfindung betrifft die sichere und effiziente Erzeugung digitaler Wasserzeichen und befasst sich insbesondere mit einem Verfahren zur Erzeugung eines Datensatzes zum Versehen von Mediendaten mit einem digitalen Wasserzeichen, einem Verfahren zur Erzeugung von mit einem digitalen Wasserzeichen versehenen Mediendaten und einem Datensatz zur Erzeugung von mit einem digitalen Wasserzeichen versehenen Mediendaten.

### Stand der Technik, Nachteile des Standes der Technik

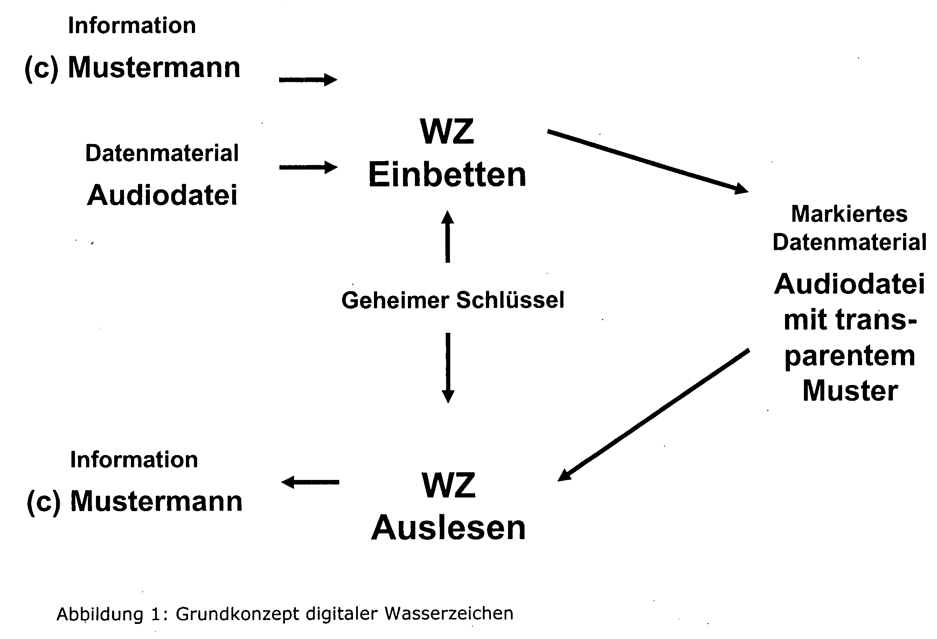

Unter einem digitalen Wasserzeichen versteht man im allgemeinen ein transparentes, nicht wahrnehmbares Muster, welches in ein Datenmaterial (Bild, Video, Audio, 3D-Modelle) mit einem Einbettungsalgorithmus unter Verwendung eines geheimen Schlüssels eingebracht wird. Jeder Wasserzeichenalgorithmus unterteilt sich in einen Einbettungsprozess und einen Abfrageprozess/Ausleseprozess. Die beiden Schritte sind in Abbildung 1 als "Einbetten" und "Auslesen" illustriert.

Das eingebettete Muster repräsentiert die eingebrachte Information. Typischerweise stellt das Muster entweder Bit "0" oder Bit "1" dar. Das Wasserzeichen kann aus einem oder mehreren Bit an Informationen bestehen. Heute üblich sind Verfahren, die mehrere Bit an Information einbetten. Diese werden unter anderem zum Urheberschutz oder zur Kundenverfolgung eingesetzt.

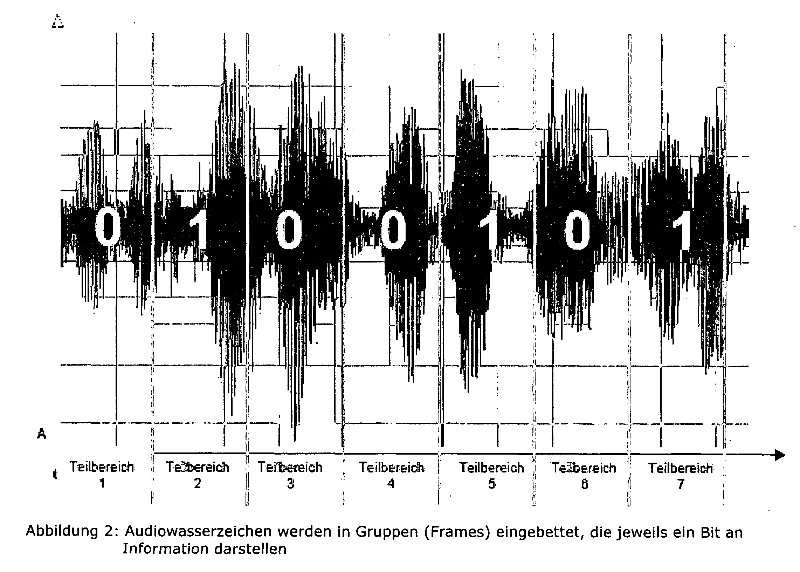

Oft wird, besonders im Audio- und Videobereich, das Datenmaterial in einzelne Gruppen unterteilt, in welche dann jeweils ein einzelnes Bit an Informationen durch ein Wasserzeichen eingebettet wird. In Abbildung 2 sieht man dies am Beispiel einer Audiodatei: Die Abtastwerte werden über die Zeit hinweg gruppiert. In den dadurch entstehenden sogenannten "Frames" (nachfolgend auch "Blöcke" genannt) wird jeweils ein Bit eingebettet.

Digitale Wasserzeichen sind eine relativ junge Technologie. Daher existieren noch keine allgemein einsetzbaren Verfahren für einzelne Medientypen, geschweige denn für mehrere Medientypen gleichermaßen einsetzbare Verfahren. Für jeden neuen Datentyp, für den Wasserzeichen entwickelt werden sollen, muss neu geklärt werden, wie das das Wasserzeichen bildende Muster definiert ist. Bei Bilddaten sind das z.B. Farbungenauigkeiten in den Pixeln, in Audiodaten Rauschfahnen. Schwerer ist es, Daten wie Text oder MIDI mit Wasserzeichen zu versehen; hier existieren auf den ersten Blick keine Freiheitsgrade für Änderungen. Es müssen neue Wege gefunden werden, Freiheitsgrade zu identifizieren und zum Einbetten der Informationen heranzuziehen.

Digitale Wasserzeichen können zu einer individuellen Markierung von digitalen Medien eingesetzt werden. Diese Markierung kann unter anderem dazu beitragen, Personen von der Verbreitung illegaler Kopien abzuschrecken, da diese anhand der eingebetteten Informationen zurückverfolgt werden können.

Derzeitige Nachteile der Technik sind:
1. Die bisherigen Algorithmen digitaler Wasserzeichen sind symmetrische Verfahren. Dies bedeutet, dass die gleichen Schlüssel und Prinzipien beim Einbetten und Auslesen der Informationen eingesetzt werden. Somit muss ein geheimer Schlüssel bei jedem Einbettungsprozess vorhanden sein. Wird dieser Schlüssel und der zu Grunde liegende Algorithmus bekannt, sind digitale Wasserzeichen leicht zerstörbar oder manipulierbar. Da allerdings das Einbetten einer individuellen Information erst zu dem Zeitpunkt geschehen kann, an dem die Information auch bekannt ist, müssen Schlüssel und Algorithmus teilweise in relativ unsicheren Umgebungen eingesetzt werden. Ein Beispiel hierfür ist der Einsatz von Wasserzeichen in einem Online-Shop zum individuellen Markieren von Kundenkopien.
2. Weiterhin wird für digitale Wasserzeichen heute noch vergleichsweise viel Rechenleistung benötigt, wodurch ein individuelles Markieren in beispielsweise Online-Shops zu einem deutlichen Mehrbedarf an Rechenleistung führt.

### Mit der Erfindung zu lösende Aufgabe

Aufgabe der Erfindung ist es, digitale Wasserzeichen in Mediendaten sicher und vor allem effizient zu erzeugen.

### Lösung der Aufgabe

Zur Lösung dieser Aufgabe wird mit der Erfindung ein Verfahren zur Erzeugung eines Datensatzes zum Versehen von Mediendaten mit einem digitalen Wasserzeichen vorgeschlagen, wobei das Verfahren die folgenden Schritte aufweist:
- Unterteilen der Mediendaten in einzelne zeitlich aufeinander folgende Blöcke,
- Erzeugen eines ersten digitalen Wasserzeichens in den Mediendaten, wobei jeder Block einen digitalen Wasserzeichenkode aufweist,
- Erzeugen eines zweiten digitalen Wasserzeichens in den Mediendaten, wobei jeder Block einen digitalen Wasserzeichenkode aufweist, der zum digitalen Wasserzeichenkode des gleichen Blocks der mit dem ersten Wasserzeichen versehenen Mediendaten invers ist,
- Erzeugen von ersten und zweiten Differenzdatensätzen zwischen den Mediendaten und den mit den ersten und den zweiten digitalen Wasserzeichen versehenen Mediendaten und
- Zusammenstellen der ersten und der zweiten Differenzdatensätze zu einem Gesamtdatensatz zur Erzeugung eines Wasserzeichens in den Mediendaten, indem von den Mediendaten blockweise entweder der zugehörige Block des ersten oder des zweiten Differenzdatensatzes subtrahiert wird.

Ferner dient zur Lösung der Aufgabe ein Verfahren zur Erzeugung von mit einem digitalen Wasserzeichen versehenen, in einzelne zeitlich aufeinander folgende Blöcke unterteilte Mediendaten durch Differenzbildung jedes Blocks der Mediendaten mit einem Block eines von zwei Differenzdatensätzen, von denen jeder seinerseits durch Differenzbildung der Mediendaten und den mit einem ersten bzw. zweiten digitalen Wasserzeichen versehenen Mediendaten erzeugt ist, welche sich dadurch voneinander unterscheiden, dass die ersten mit digitalen Wasserzeichen versehenen Mediendaten in jedem Block einen Wasserzeichenkode aufweisen, der invers zu dem Wasserzeichenkode in dem gleichen Block der zweiten mit digitalen Wasserzeichen versehenen Mediendaten ist.

Schließlich dient zur Lösung der obigen Aufgabe auch ein Datensatz zur Erzeugung von mit einem digitalen Wasserzeichen versehenen, in einzelne zeitlich aufeinander folgende Blöcke unterteilte Mediendaten durch blockweise Differenzbildung, mit zwei Differenzdatensätzen, von denen jeder durch Differenzbildung der Mediendaten und den mit einem ersten bzw. zweiten digitalen Wasserzeichen versehenen Mediendaten erzeugt ist, welche sich dadurch voneinander unterscheiden, dass die ersten mit digitalen Wasserzeichen versehenen Mediendaten in jedem Block einen Wasserzeichenkode aufweisen, der invers zu dem Wasserzeichenkode in dem gleichen Block der zweiten mit digitalen Wasserzeichen versehenen Mediendaten ist.

Die Besonderheit der Erfindung besteht darin, dass die eigentliche Wasserzeichengenerierung auf eine einfache mathematische Rechenoperation, nämlich die Subtraktion kodierter Signale von den Mediendaten, die mit dem digitalen Wasserzeichen zu versehen sind, reduziert ist. Dabei wird wahlweise von jedem Block der Mediendaten die diesem Block entsprechenden kodierten Daten eines der beiden Differenzdatensätze subtrahiert. Die Differenzdatensätze wurden zuvor durch Anwendung eines Wasserzeichenalgorithmus auf die Mediendaten generiert, und zwar mit der Besonderheit, dass die Wasserzeichenkode jedes Blocks der beiden Differenzdatensätze invers zueinander sind.

Die Mediendaten lassen sich zusammen mit den beiden Differenzdatensätzen an einen hierfür autorisierten Empfänger versehen, der seinerseits bei Weiterversand der Mediendaten für die Erzeugung der individuellen digitalen Wasserzeichen sorgt. Die Differenzdatensätze lassen sich, da kleinen Signalen entsprechend, vorteilhafterweise durch Anwendung von Datenkompressionsalgorithmen komprimieren, so dass der gesamte Datensatz weiter reduziert ist.

Mit der Erfindung wird also ein digitaler Datensatz geschaffen, welcher Mediendaten und Wasserzeicheninformationen vereint. Dieser digitale Datensatz löst beide zuvor beschriebenen Probleme:
1. Nach der Erfindung ist der Prozess des Einbettens eines Wasserzeichens in eine Vorbereitungs- und die eigentliche Einbettungsphase unterteilt. Der Schlüssel und der Algorithmus müssen nur während der Vorbereitungsphase vorhanden sein. Hier wird ein digitales Medium auf das Einbetten einer beliebigen Information fester Länge vorbereitet und in einen Datensatz umgewandelt. Bei der Einbettungsphase werden nun die gewünschten Informationen in das digitale Medium eingebettet, indem aus dem Datensatz die notwendigen Informationen entnommen werden. Weder Schlüssel noch Wasserzeichenalgorithmus sind hierzu notwendig.
2. Durch den Prozess der Datensatzgenerierung wird eine sehr starke Einsparung an Rechenleistung für das eigentliche Einbetten erreicht. Statt komplexer individueller Berechnungen zur Signal-Transformation kommen nur einfache mathematische Operationen zum Einsatz.

### Verbesserungen und Vorteile gegenüber dem Stand der Technik

Der erfindungsgemäße Datensatz bietet die folgenden Vorteile:
1. Eine individuell markierte Mediendatei kann ohne Zuhilfenahme des Wasserzeichenalgorithmus oder des Schlüssels erstellt werden, indem alle vorbereiteten Informationen aus dem Datensatz entnommen werden. Somit müssen weder Schlüssel noch Algorithmus weitergegeben werden, wenn an anderer Stelle eine Markierung erfolgen soll.
2. Der Rechenaufwand zur Markierung der Mediendateien ist nur einmal bei Erstellung des Datensatzes notwendig. Mit dem Datensatz können markierte Dateien sehr schnell erzeugt werden.
3. Der Datensatz ist platzsparend; obwohl die dreifache Informationsmenge vorliegt, kann der Zuwachs der Dateigroße deutlich niedriger ausfallen, wenn eine Datenkompression angewendet wird.
4. Der Datensatz bietet die Möglichkeit, neben markierten Mediendateien auch die Originaldatei wieder herzustellen, indem nacheinander alle Teilbereiche ohne das Hinzufügen von Wasserzeichendifferenzen in eine Datei geschrieben werden.
5. Durch den Datensatz sind verschiedene kryptographische Funktionen leicht mit den Wasserzeichen zu verknüpfen:
   - Durch Hashfunktionen über jeden Teilbereich kann die Unversehrtheit der Teilbereiche und daraus folgend bei Wiederherstellen des Originals auch dessen Unversehrtheit belegt werden. Die Hashwerte werden z.B. in dem Datensatz abgelegt.
   - Durch eine (partielle) Verschlüsselung der Teilbereiche ist ein effizienter Schutz vor einem Entwenden und Weiterverwenden des Datensatzes möglich. Ein geheimer Schlüssel ist zum Zugriff auf die Mediendaten notwendig. Bei diesem Schlüssel handelt es sich nicht um den Wasserzeichenschlüssel, wie er für den Wasserzeichenalgorithmus verwendet wird.
   - Auf Teilbereiche können digitale Signaturen aufgebracht werden, welche Quelle und Unversehrtheit belegen.
6. Das Datensatzprinzip kann weiterhin dazu verwendet werden, eine Folge von Verteilungsstationen nachvollziehbar zu gestalten, indem nach und nach einzelne Wasserzeichenbits im Datensatz fest eingebunden werden und von nachfolgenden Verteilern nicht mehr verändert werden können.

Die Erfindung wird nachfolgend anhand der Abbildungen näher erläutert. Im einzelnen zeigen dabei:
- Abb. 1: schematisch das Grundkonzept digitaler Wasserzeichen,
- Abb. 2: ein Beispiel für die Einbettung eines Audiowasserzeichens in Gruppen (Frames oder Blöcke) eines Audiosignals, wobei die Audiowasserzeichen jeweils durch ein Bit an Information dargestellt sind,
- Abb. 3: eine schematische Darstellung des erfindungsgemäßen Verfahrens zur Erzeugung der Differenzdatensätze,
- Abb. 4: eine schematische Darstellung zur Verdeutlichung der Aufteilung der Mediendaten in Teilbereiche und zur Vorbereitung der Wasserzeichen und
- Abb. 5: schematisch die einzelnen Schritte zum Generieren des Datensatzes.

Wie sich aus der obigen Beschreibung ergibt, wird der Datensatz in mehreren Schritten erstellt. Das nachfolgend vorgestellte Prozedere geht von einem Wasserzeichenalgorithmus aus, der Informationsbits in Teilbereiche des gesamten zu markierenden Mediums einbetten kann.
1. Festlegen der gewünschten Anzahl an Informationsbits
2. Entnehmen eines Teilbereichs A des Mediums, in welchen ein einzelnes Informationsbit eingebettet werden soll.
3. Markieren von A anhand des Wasserzeichenalgorithmus und eines geheimen Schlüssels mit dem Bit 0, daraus resultiert A(0). Analog dazu wird A(1) erzeugt.
4. Berechnen der Differenz DA(0) zwischen A und A(0). Da digitale Wasserzeichen oft eine Art schwaches Rauschen in den Dateien erzeugen, ist die zu erwartende Differenz ein Rauschsignal mit deutlich geringerer Energie als A.
5. Das schwache Signal DA(0) kann effizient komprimiert werden, da entsprechende Kompressionsalgorithmen die Tatsache der niedrigen Energie ausnutzen. Das Komprimat ergibt CA(0).
6. Analog wird aus A und A(1) DA(1) und danach CA(1) berechnet.
7. Nun werden A, CA(0) und CA(1) als Datensatz zusammen gestellt.
8. Analog wird mit allen Teilbereichen des Mediums verfahren.

Soll nun mit Hilfe des Datensatzes eine markierte Datei erzeugt werden, wird wie folgt vorgegangen:
1. Vorgabe der einzubettenden Bitsequenz, z.B. "0010".
2. Laden von A aus dem Datensatz.
3. Identifizieren des ersten Bits des Wasserzeichens, hier "0".
4. Laden von CA(0) aus dem Datensatz.
5. Dekomprimieren von DA(0) aus CA(0).
6. Berechnen von A(0) aus A und DA(0).
7. Schreiben des Teilbereichs A(0) in die Mediendatei.
8. Analog wird mit Bits das Wasserzeichen für die folgenden Teilbereiche des Mediums verfahren.

### Ausführungsbeispiel

Nachfolgend wird ein Datensatz für die Erzeugung eines Wasserzeichens für Audiodaten im PCM-Format als Ausführungsbeispiel der Erfindung näher beschrieben.
1. Eine zu markierende Datei wird ausgewählt. In diesem Beispiel wird von einer Audiodatei in CD-Qualität, also 44,1 kHz Abtastrate, 16 Bit Abtastwerte und Stereoformat ausgegangen.
2. Der Wasserzeichenalgorithmus wird mit geeigneten Parameter, dem geheimen Wasserzeichenschlüssel und der zu markierenden Datei aufgerufen. Dies geschieht zwei Mal, einmal mit einer Folge von Bitwerten "0" der Länge des einzubettenden Wasserzeichens, das zweite Mal analog mit dem Bitwert "1".
3. Die Datensatzgenerierung geht nun wie folgt vor:
   a) Es werden die Differenzen zwischen dem Original und den markierten Dateien berechnet. Diese Differenzen liegen nun ebenfalls in CD-Qualität vor.
   b) Nun werden schrittweise die Blöcke des Originals durchlaufen. Jeder Block des Originals wird in den Datensatz gespeichert. Nun werden die zu dem Block gehörenden Differenzen vom Original zur Markierung mit "0" und "1" aus den Differenzdateien entnommen und durch eine ADPCM-Kompression auf ein Viertel ihrer Originalgröße gebracht. Danach werden beide komprimierten Differenzen im Datensatz (z.B. vor oder hinter dem Original) gespeichert. Somit wird nun noch das 1,5-fache des Originals benötigt.
   c) Weiterhin können nun Informationen über die Güte des Wasserzeichens in dem Block, ein Hashwert des Original-Blocks oder andere Informationen in dem Datensatz gespeichert werden.

### Analog wird mit allen Blöcken vorgegangen.

4. Eine Optimierung des Verfahrens wird dadurch erreicht, dass die bei dem Wasserzeichen vorkommenden fixen Bitsequenzen als einfache Differenz und in einem Stück gespeichert werden, da hier keine Unterscheidung zwischen unterschiedlichen Wasserzeichen vorliegt. Dadurch wird der Größenzuwachs zum Original weiter vermindert.
5. Eine weitere Optimierung liegt darin, die Differenzen in einer niedrigeren Qualität als das Original zu speichern, da es sich bei den Wasserzeicheninformationen um ein Frequenzband handelt, welches durch eine halbe Abtastrate von 22 kHz noch vollständig wiedergegeben werden kann. Dadurch halbiert sich die zu speichernde Information der Differenzen. Die Abtastrate kann zu einer stärkeren Kompression weiter vermindert werden.

Durch die aufgeführten Schritte entsteht ein Datensatz, auf den nun mit einem entsprechenden Algorithmus zugegriffen werden kann und aus dem sehr effizient markierte Kopien des Originals, aber auch das Original selbst erzeugt werden können.

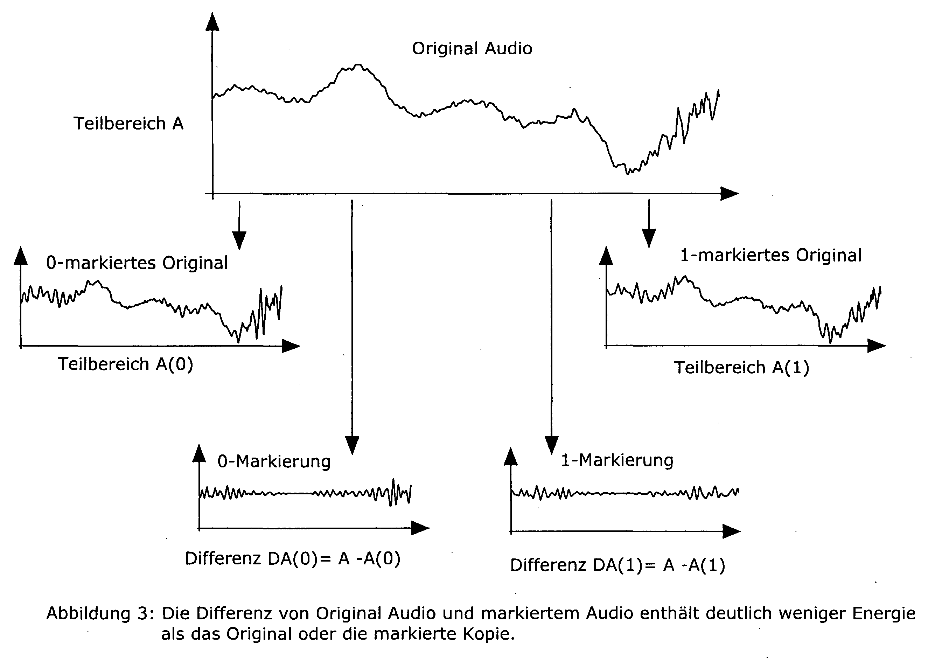

Abbildung 3 zeigt die Differenzen zwischen dem Original und den markierten Kopien des Originals. Es wird deutlich, dass die Differenzen weniger Energie enthalten als das Original und somit mit weniger Informationen darstellbar sind. Die Abbildung zeigt zum besseren Erkennen ein sehr starkes Wasserzeichen, üblicherweise sind die Differenzen noch deutlich schwächer als hier abgebildet.

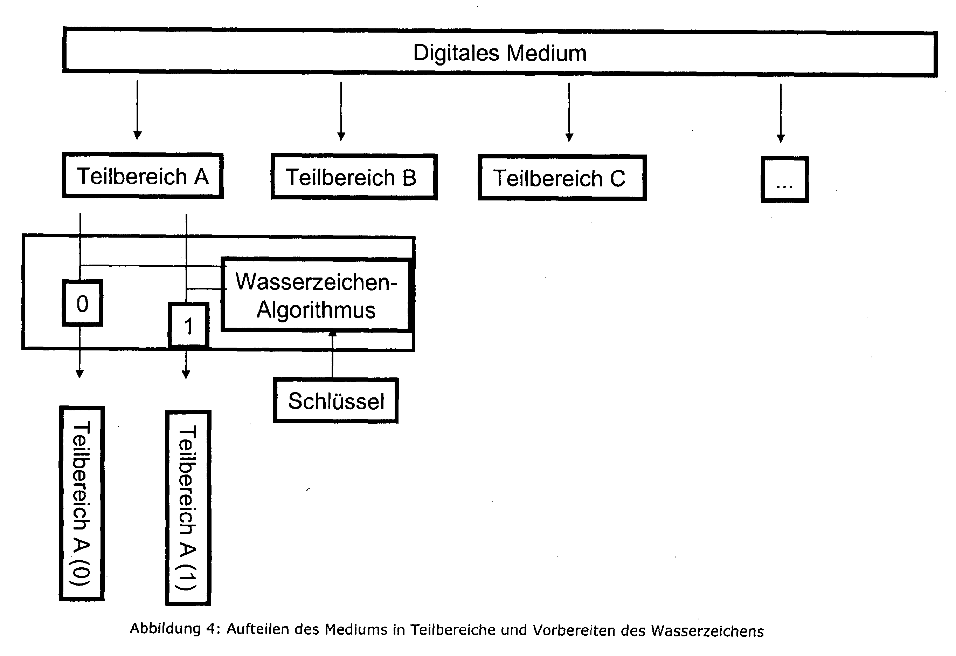

Abbildung 4 zeigt, wie das Medium in Teilbereiche aufgeteilt wird. Diese Teilbereiche werden dann mit dem Wasserzeichenalgorithmus und dem Schlüssel mit je einmal mit "0" und mit "1" markiert. Es entstehen die beiden Kopien des Teilbereiches Teilbereich (0) und Teilbereich (1).

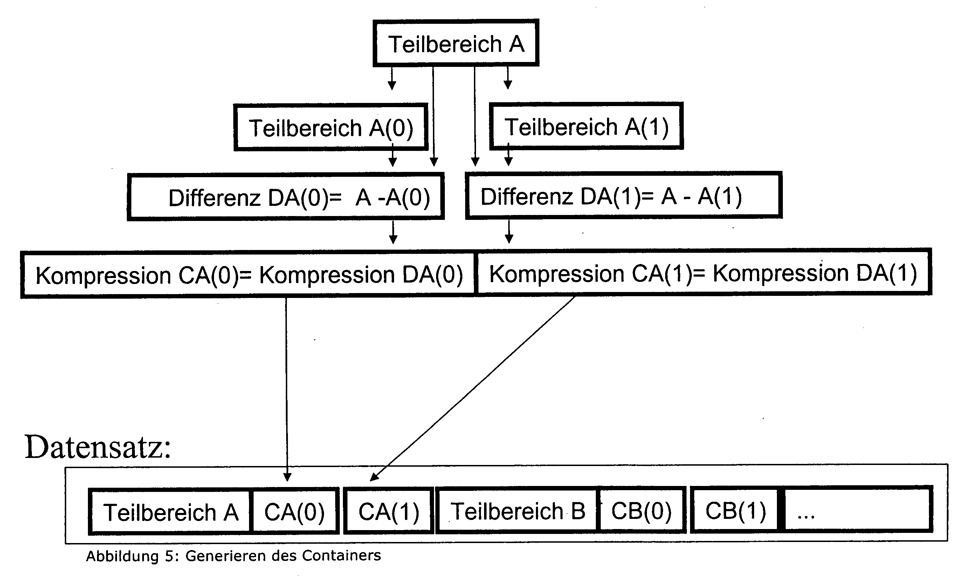

Abbildung 5 zeigt das Erzeugen des Datensatzes aus den vormarkierten Teilbereichen. Es wird jeweils die Differenz von Teilbereich und Teilbereich (0;1) berechnet. Diese Differenzen werden komprimiert. Danach werden der Teilbereich und die beiden komprimierten Differenzen in den Datensatz gespeichert.

## Patentansprüche

1. Verfahren zur Erzeugung eines Datensatzes zum Versehen von Mediendaten mit einem digitalen Wasserzeichen, mit den folgenden Schritten:
- Unterteilen der Mediendaten in einzelne zeitlich aufeinander folgende Blöcke,
- Erzeugen eines ersten digitalen Wasserzeichens in den Mediendaten, wobei jeder Block einen digitalen Wasserzeichenkode aufweist,
- Erzeugen eines zweiten digitalen Wasserzeichens in den Mediendaten, wobei jeder Block einen digitalen Wasserzeichenkode aufweist, der zum digitalen Wasserzeichenkode des gleichen Blocks der mit dem ersten Wasserzeichen versehenen Mediendaten invers ist,
- Erzeugen von ersten und zweiten Differenzdatensätzen zwischen den Mediendaten und den mit den ersten und den zweiten digitalen Wasserzeichen versehenen Mediendaten und
- Zusammenstellen der ersten und der zweiten Differenzdatensätze zu einem Gesamtdatensatz zur Erzeugung eines Wasserzeichens in den Mediendaten, indem von den Mediendaten blockweise entweder der zugehörige Block des ersten oder des zweiten Differenzdatensatzes subtrahiert wird.

2. Verfahren nach Anspruch 1, **dadurch gekennzeichnet, dass** die beiden Differenzdatensätze einem Datenkompressionsalgorithmus unterzogen werden und dass die komprimierten Differenzdatensätze zum Gesamtdatensatz zusammen gestellt werden.

3. Verfahren nach Anspruch 1 oder 2, **dadurch gekennzeichnet, dass** jeder Block der mit Wasserzeichen versehenen Mediendaten als digitaler Wasserzeichenkode entweder ein "0"-Bit oder ein "1"-Bit aufweist.

4. Verfahren nach einem der Ansprüche 1 bis 3, **dadurch gekennzeichnet, dass** dem Gesamtdatensatz auch die Mediendaten hinzugefügt werden.

5. Verfahren zur Erzeugung von mit einem digitalen Wasserzeichen versehenen, in einzelne zeitlich aufeinander folgende Blöcke unterteilte Mediendaten durch Differenzbildung jedes Blocks der Mediendaten mit einem Block eines von zwei Differenzdatensätzen, von denen jeder seinerseits durch Differenzbildung der Mediendaten und den mit einem ersten bzw. zweiten digitalen Wasserzeichen versehenen Mediendaten erzeugt ist, welche sich dadurch voneinander unterscheiden, dass die ersten mit digitalen Wasserzeichen versehenen Mediendaten in jedem Block einen Wasserzeichenkode aufweisen, der invers zu dem Wasserzeichenkode in dem gleichen Block der zweiten mit digitalen Wasserzeichen versehenen Mediendaten ist.

6. Verfahren nach Anspruch 5, **dadurch gekennzeichnet, dass** die beiden Differenzdatensätze einem Datenkompressionsalgorithmus unterzogen werden und dass die komprimierten Differenzdatensätze zum Gesamtdatensatz zusammen gestellt werden.

7. Verfahren nach Anspruch 5 oder 6, **dadurch gekennzeichnet, dass** jeder Block der mit Wasserzeichen versehenen Mediendaten als digitaler Wasserzeichenkode entweder ein "0"-Bit oder ein "1"-Bit aufweist.

8. Datensatz zur Erzeugung von mit einem digitalen Wasserzeichen versehenen, in einzelne zeitlich aufeinander folgende Blöcke unterteilte Mediendaten durch blockweise Differenzbildung, mit zwei Differenzdatensätzen, von denen jeder durch Differenzbildung der Mediendaten und den mit einem ersten bzw. zweiten digitalen Wasserzeichen versehenen Mediendaten erzeugt ist, welche sich dadurch voneinander unterscheiden, dass die ersten mit digitalen Wasserzeichen versehenen Mediendaten in jedem Block einen Wasserzeichenkode aufweisen, der invers zu dem Wasserzeichenkode in dem gleichen Block der zweiten mit digitalen Wasserzeichen versehenen Mediendaten ist.

9. Datensatz nach Anspruch 8, **dadurch gekennzeichnet, dass** die beiden Differenzdatensätze jeweils komprimiert sind.

10. Datensatz nach Anspruch 8 oder 9, **dadurch gekennzeichnet, dass** jeder Block der mit Wasserzeichen versehenen Mediendaten als digitaler Wasserzeichenkode entweder ein "0"-Bit oder ein "1"-Bit aufweist.

11. Datensatz nach einem der Ansprüche 8 bis 10, **dadurch gekennzeichnet, dass** der Datensatz ferner die Mediendaten aufweist.
